# EUROPEAN PATENT SPECIFICATION

(11) **EP 3 980 198 B1**
(45) Date of publication and mention of the grant of the patent: **01.05.2024**
(21) Application number: 20736250.0
(22) Date of filing: 09.06.2020
(51) Int. Cl.: B08B 3/02, B08B 3/12, H02S 40/10

(54) **SYSTEM AND METHOD FOR CLEANING COVER GLASSES OF PHOTOVOLTAIC MODULES**
SYSTEM UND VERFAHREN ZUR REINIGUNG VON DECKGLÄSERN VON PHOTOVOLTAIKMODULEN
SYSTÈME ET PROCÉDÉ DE NETTOYAGE DE VERRES DE PROTECTION DE MODULES PHOTOVOLTAÏQUES

(30) Priority: 09.06.2019 DE 102019115647
(43) Date of publication of application: 13.04.2022
(73) Proprietor: Dussault, Donald Herbert, 78333 Stockach (DE)
(72) Inventor: Dussault, Donald Herbert, 78333 Stockach (DE)
(74) Representative: Patentanwälte und Rechtsanwalt Weiß, Arat & Partner mbB
(86) International application number: PCT/EP2020/066000
(87) International publication number: WO 2020/249576

(56) References cited:
- WO-A1-2015/150529
- WO-A1-2019/100625
- CN-A- 107 813 935
- FR-A1- 3 026 323
- US-A1- 2017 158 329
- US-A1- 2017 194 897
- US-A1- 2017 305 547
- US-A1- 2018 337 633

## Description

### Technical field

The invention relates to a system for cleaning cover glasses of photovoltaic modules with a cleaning device according to the preamble of claim 1 and a method according to claim 13.

### State of the art

With the help of photovoltaics, the radiation energy of sunlight is converted into usable electricity. Photovoltaic modules form the basis of every photovoltaic system. In the literature, the term "panel" is also used instead of the term "module". In the following, however, the term "module" is used uniformly. Photovoltaic modules convert sunlight into electricity. A photovoltaic module consists of connected solar cells that convert direct sunlight into electricity. The efficiency of converting the radiant energy of sunlight into usable electricity in a photovoltaic module is drastically reduced by the presence of dust, dirt, pollen, bird or other animal droppings, leaves, salt, sand, ash and the like more on a cover glass of the photovoltaic module. In sandy desert regions, the combination of wind, gravelly sand and lack of rain is the main cause. Dust and road abrasion are the contamination factors in photovoltaic module fields in urban and street environments. In rural and suburban areas in the immediate vicinity of fields and forests, the high pollen count/organic material is the main factor for the contamination of the cover glass of a photovoltaic module. In marine or salt water environments, residual salt crystal is added to sand and chippings as a possible further source of contamination.

The efficiency of the conversion of sunlight into electricity by the photovoltaic module can decrease by 25% or more due to the accumulation of these impurities. In regions with maximum sunlight (and little rain) and high levels of sand and dust, the reduction in the efficiency of the modules can be as high as 30% or more. The same effect can be observed at locations with high pollen count, as pollen build-up usually occurs at times with maximum sunlight (and little rain).

The type of adhesion of the contaminant to the surface of the cover glass determines whether the contaminant can be removed by normal rain or whether more force is necessary to remove the contaminant from the cover glass. In many cases, the type of contamination combined with local heat can form a film that cannot be removed or at least significantly reduced by average rainfall.

The majority of commercial installation areas for photovoltaic modules are logically located in areas with maximum sunlight and minimum rainfall. In these areas the pollution accumulates and leads to a steady reduction in the efficiency of the conversion of sunlight into electricity by the photovoltaic modules.

Regular cleaning of the cover glass of each photovoltaic module is required to maintain the efficiency of the conversion of sunlight into electricity by the photovoltaic module.

The cover glass that forms the top of the photovoltaic module is typically a tempered, low-iron glass selected for the strength and transmission of light with wavelengths from 350 nm to 1200 nm. The top side of the cover glass can be treated with various thin layers consisting of antireflective and protective layers. Module manufacturers also use normal float glass to save costs.

Currently, different cleaning methods are known and used on the market. Cleaning the cover glass of a photovoltaic module requires the use of one or more of the three basic cleaning mechanisms, namely zeta potential, surface etching and physical force. Contamination/particle type and particle binding force determine which cleaning mechanism or combination of mechanisms is most effective.

The zeta potential process involves the use of higher pH liquids (typically >11) to charge the particle to the same negative potential as the surface, causing the particle to repulse from the surface. This results in the particle being elevated about 100 nm from the surface, where it must be rinsed off before the charge equalizes.

Surface etching uses undercut etching of the glass surface using a mild etching/detergent formula typically containing ammonia compounds and possibly an oxidizing/surfactant agent. This slight etch undercut of the bonded area of the particle facilitates removal from the surface.

Physical force cleaning is used alone or in conjunction with zeta potential and/or etching to mechanically or physically remove the particle from the surface. Basic methods of physical cleaning are brushes or sponges made of different materials.

Some advanced methods currently use high-pressure or accelerated droplet spraying systems.

The disadvantages and limitations of all three conventionally used mechanisms are well documented.

For the zeta potential process, the high pH levels required for this type of cleaning require basic chemicals that must be neutralized after the cleaning step. Thorough, active water rinsing is required for good cleaning performance and residual rinsing. Since photovoltaic module installations are usually elevated and installed in many regions, the downstream effect of high pH solutions on other construction and assembly materials, flora and fauna would most likely be negative in the long term. Although the positive cleaning effect without etching at lower temperatures indicates superior cleaning performance, this process is not used for in-situ photovoltaic module cleaning due to the disadvantage of environmental and material compatibility.

Surface etch solutions that combine anionic and surfactant materials in diluted solution can be designed to be approximately pH neutral and avoid some of the environmental problems, but the use of any chemistry must be reconciled with the location of the photovoltaic module. The cleaning effect of the surface etch solutions alone is usually not sufficient for complete cleaning. Normally an active rinsing step is required to remove the surfactant residues from the glass. The best cleaning performance is usually achieved by adding a physical force to the chemical or rinsing step. In addition to chemical residues and interaction with other assembly and construction materials, constant light etching increases surface roughness over time. The rougher surface results in even better adhesion of new contaminants/particles and shortens the cycle time between cleaning operations, which is another drawback.

The physical introduction of force in the simplest form is a very common method of removing contamination/particles from the cover glass of the photovoltaic module. Manual and automated mechanical systems use brushes, sponges and squeegees made of various materials with water or surface etching surfactant mixtures. The brush/sponge holder is guided along the glass surface, interrupting particle binding and rolling away the particle in the liquid or brush. Due to the forces required for the effectiveness of this cleaning method, there is a very high probability of micro-scratches in the cover glass. These micro-scratches increase the intensity of the cleaning process depending on the type of particle/soiling to be removed. Hard materials such as salt crystals, sand and volcanic or asphalted particles can result in increased and stronger scratches. As the number of cleaning cycles increases, the accumulation of surface scratches increases proportionally. The brush/sponge material will also fill with hard/sharp particles over time, so the cleaning process itself leads to micro-scratches and cross-contamination. The combination of surface etching solutions and mechanical brush/sponge systems has the potential to multiply the increase in roughness, resulting in an even greater retention of impurities and an increase in required cleaning cycles. Finally, the continuous deterioration of the surface due to scratches and roughness reduces the light transmission and conversion efficiency of even a "clean" photovoltaic module and reduces the effective life of the photovoltaic module hardware.

The other, less common methods of cleaning cover glass of photovoltaic modules use water in high-pressure or binary nozzle spraying processes. The high pressure spray is locally effective in removing contaminants/particles, but has the potential to damage seal/edge layers due to extremely high local hydraulic forces. Water consumption and low throughput of high pressure cleaning eliminate it as a viable method in water limited regions. Binary nozzles with accelerated drop spray have also been used experimentally. Since binary nozzles use compressed gas to accelerate water droplets, water consumption is significantly reduced. However, the cleaning performance due to the limited force of the water droplets hitting the glass surface is lower than with other processes, so this process is not common.

The WO 2015/150529 A1 discloses the preamble of claim 1 and refers to a cleaning drone, a corresponding docking station configured to operate with the cleaning drone, a system comprising at least one cleaning drone and at least one docking station and a cleaning method using at least one cleaning drone. The cleaning drone comprises a cleaning device configured to operate on surfaces such as glass or photovoltaic panels.

The CN 107813935 A discloses an unmanned aerial vehicle type streetlamp solar panel cleaning device, and belongs to the field of environmental sanitation tools. The unmanned aerial vehicle type streetlamp solar panel cleaning device is composed of an unmanned aerial vehicle, a ground transport vehicle and a remote control device. The ground transport vehicle is connected with the unmanned aerial vehicle through a thin water pipe and provides a cleaning agent, the unmanned aerial vehicle is in communication with the remote control device through a signal emitter and is controlled to move and do cleaning actions, a worker only needs to control the unmanned aerial vehicle to do cleaning through the remote control device standing on the ground.

The US 2018/0337633 A1 discloses a system for evaluation of soiling of solar photovoltaic (PV) modules and may comprise a first pair of solar PV modules exposed to the elements, a second pair of solar PV modules enclosed within a protective housing having a glass cover; a component coupling the glass cover to the protective housing. The component may be configured to displace the glass cover for a limited period of time to temporarily expose the second pair of solar PV modules to the atmospheric elements.

A soiling station for photovoltaic maintenance and monitoring is discloses in the US 2017/0194897 A1 and includes a cover movable from a first position to a second position; and a photovoltaic module. The cover is configured and arranged to cover the photovoltaic module when the door is in the first position, and wherein a sensor is configured to detect a solar irradiance of the photovoltaic module.

The WO 2019/100625 A1 discloses a cleaning method of a photovoltaic cleaning robot, comprising: controlling a transportation device to move to a target position of a photovoltaic panel to be cleaned, at least one cleaning machine being placed on the transportation device; and successively placing the cleaning machine on the transportation device onto the photovoltaic panel to be cleaned, so that the cleaning machine independently executes cleaning.

The FR 3026323 A1 discloses an ultrasonic cleaning system of a fouled surface, comprising a main structure, a tank for cleaning liquid, and a device ultrasonic wave generator, comprising a plurality of piezoelectric transducers, the active faces of which are fixed to a plate for the transmission of acoustic power to the cleaning liquid, a support structure in which are located the transducers, at least one flexible cleaning element extending from at least one edge of the support structure and delimiting, with one or more closure elements, a cleaning liquid flow cavity, the ultrasonic waves being emitted in the cavity in contact with the cleaning liquid by the piezoelectric transducers, and a flow device cleaning liquid in the cavity.

### Object of the invention

The object of this invention is to overcome the disadvantages arising from the state of the art. In particular, a system and a method are to be provided with which a simple, cost-effective and above all environmentally friendly control and cleaning of photovoltaic modules and their cover glasses can be carried out. At the same time, damage to the photovoltaic modules should be prevented.

### Solution of the object

The features according to claim 1 as well as the features of claim 13 lead to the solution of the object.

Advantageous designs are described in the dependent claims.

In the system for cleaning cover glasses of photovoltaic modules with a cleaning device, the preferably autonomous cleaning device/unit (ACU) comprises a megasonic module in which is integrated a megasonic transducer and process fluid distributor module (TMM). Furthermore, the autonomous cleaning device comprises an RF generator module, a process liquid supply module, a motion and positioning module and a control communication module.

A drone transports the cleaning device from a base to the photovoltaic module or from the photovoltaic module and another photovoltaic module and back to the base after completion of a cleaning sequence. Of course, the cleaning device can be placed not only by drone, but also by crane or by hand and supplemented with all possible and conceivable aids.

The autonomous cleaning device also includes a replaceable battery and a replaceable liquid container. In addition to the cleaning device, the drone also transports replacement batteries and/or replacement fluid containers to the cleaning device and collects the empty and replaceable battery previously located in the autonomous cleaning device and/or the empty and replaceable fluid container previously located in the autonomous cleaning device. If the battery and/or liquid container in the autonomous cleaning device is emptied during a cleaning sequence, the drone can replace it without having to transport the entire autonomous cleaning device to the base.

The drone is also intended to fly an inspection module over the photovoltaic modules in order to determine their respective locations. The inspection module is used to map the solar field and the photovoltaic modules. It maps the field once and provides the reference points for the cleaning process, i.e. the collection and return points for the autonomous cleaning device. The inspection module is usually flown out once at the beginning of a cleaning event in order to carry out the mapping. The inspection module can then be flown back into the base and stored there.

Furthermore, the system provides for a comparison device in accordance with the invention, which is arranged under identical process parameters as the photovoltaic modules and preferably also in the area, i.e. at the location of the photovoltaic modules. It is preferably permanently installed there, which makes the most sense due to a regularly scheduled recording of the degree of contamination. However, the possibility should be mentioned that the comparison device is moved, for example, around the location of the photovoltaic modules in order to evaluate the process parameters at different points. Or there are more than one comparison device arranged around the area of the photovoltaic modules.

The comparison device records and supplies information on contamination of the photovoltaic modules and their cover glasses under the respective conditions of the process parameters. The comparison device compares the efficiency of the photovoltaic module field with the efficiency of a reference photovoltaic cell of the same type in the comparison device, which is however "clean". This means that a reference state of a photovoltaic module can be read from the reference photovoltaic cell. The reference state represents the optimal state (= clean state) of the cover glass of the photovoltaic module. The reference photovoltaic cell is arranged under a cover, which is detachably connected to the comparator and can be opened or removed to expose the reference photovoltaic cell when the comparison measurement is to be performed.

It is also conceivable that the reference photovoltaic cell is placed under a shutter that opens to release the reference photovoltaic cell when the comparison measurement is to be performed, or a rolling transparent film may be provided that is placed in front of the reference cell as a clean transparent surface during the comparison measurement. Different possibilities are conceivable here and should be covered by the present invention. It is important that a reference photovoltaic cell is available with the same process parameters, with the help of which a comparison can be made between a dirty photovoltaic module and a clean photovoltaic module. It is irrelevant whether the reference photovoltaic cell is covered with a curtain, film or other layer/cover that can be rolled away, folded away or removed or pushed aside in some other way. It is important that comparative measurements between the dirty photovoltaic modules and the reference photovoltaic cell can be carried out at certain intervals in order to determine the degree of contamination of the photovoltaic modules and, if necessary, start a cleaning process.

The collected data of the comparison device is preferably transmitted via radio frequency data link and/or internet to a corresponding computer or a central control system.

The information collected from the drone, the cleaning device, the base and the inspection module as well flows into a computer or a central control system.

The following steps are included in a method according to the invention for cleaning a cover glass of a photovoltaic module by means of an autonomous cleaning device, for which separate protection is desired:
- a megasonic transducer is positioned relative to a first cover glass of a first photovoltaic module,
- a gap having a predetermined width is formed between the cover glass of the photovoltaic module and an active surface of the megasonic transducer,
- the gap is at least partially filled with a process fluid,
- the megasonic transducer transmits megasonic vibrations into the process fluid in the gap and to at least part of the cover glass of the photovoltaic module,
- the high sound pressure causes cavitation bubbles or bubbles to form in a region of a surface of the cover glass of the photovoltaic module, whereby in the event of a collapse of the cavitation bubbles results in shock waves that are emitted locally to dislodge the particles/impurities adhering to the surface of the cover glass without damaging the surface of the cover glass of the photovoltaic module,
- the flow of the process fluid through the gap transports the particles/impurities away from the surface of the cover glass of the photovoltaic module.

The method of the present invention introduces a new and unique, non-contact, damage-free physical force process for in-situ cleaning of cover glass of photovoltaic modules.

According to the method of the present invention, the megasonic transducer is held relative to the cover glass of the photovoltaic module to form a gap with a predetermined width between the cover glass of the photovoltaic module and an active surface of the megasonic transducer. The active surface of the megasonic transducer is preferably flat and thus a gap of approximately uniform width is formed. For example, the gap can have a width of approx. 1 mm. In particular, the megasonic transducer may comprise a piezoelectric crystal arranged to emit megasonic oscillations or megasonic vibrations through the active surface when activated by the application of a high frequency signal. Instead of a crystal, the megasonic transducer can comprise a variety of piezoelectric crystals arranged along the active surface area.

Megasonic oscillations or megasonic vibrations are understood to be in particular in a frequency range between about 400 kHz and about 2 MHz. The megasonic transducer can be configured to emit about 0.3 - 3.0 watts per cm2 of its active area, for example 1.0 watts of megasonic energy per cm2 in the above frequency range. It should be noted that the megasonic oscillations or megasonic vibrations themselves do not yet have any effect. Only when the oscillations/vibrations reach a level that causes cavitation bubbles to form and then burst will the particles/impurities be dislodged and transported away. Cavitation usually only begins with an emission of the megasonic transducer of 0.3 - 3.0 watt/cm2 active area. The active area of the megasonic transducer is the bonded PZT crystal area (Piezo materials based on lead-zirconate-titanate). The active area can be any size. The megasonic oscillations or megasonic vibrations only take place in the area of the crystal(s). Furthermore, the gap must be completely filled with liquid.

This inventive method also includes the step of at least partially filling the gap with a process fluid. In particular, the process fluid bridges the gap between the surface of the cover glass of the photovoltaic module and the active surface of the megasonic transducer in at least part of the gap. Preferably, the process fluid completely fills the gap between the cover glass of the photovoltaic module and the megasonic transducer.

In particular, the process fluid is a liquid, for example water or a cleaning liquid or a mixture of these or other liquids or additives. The process fluid can be selected depending on the degree and type of contamination to be removed.

According to the inventive method, the megasonic transducer is controlled to transfer megasonic vibrations into the process fluid in the gap and to at least part of the cover glass of the photovoltaic module. Thus, the process fluid filling the gap is used to transfer the megasonic vibrations emitted by the megasonic transducer to a surface of the cover glass of the photovoltaic module when activated.

By generating megasonic oscillations with a frequency of at least 400 kHz and transferring the megasonic oscillations to the process fluid that fills the gap above the cover glass of the photovoltaic module, a particularly uniform sound field can be generated. In addition, the megasonic energy can be efficiently transferred to the surface of the cover glass of the photovoltaic module in this way. It is assumed, particularly depending on the properties of the fluid, that a density of megasonic energy corresponding to about 0.5 w/cm2 of the active area of the megasonic transducer is sufficient to produce cavitation bubbles near the surface of the photovoltaic module cover glass, and that when the cavitation bubbles collapse, local shock waves are emitted which efficiently remove particles and impurities adhering to the surface of the cover glass of the photovoltaic module without damaging the surface. Furthermore, the detached particles are transported away from the surface of the cover glass of the photovoltaic module due to cavitation shock waves and the flow of process fluid through the gap, and the surface of the cover glass of the photovoltaic module is not impaired or damaged.

Preferably, the megasonic transducer is held in a substantially horizontal position above the cover glass of the photovoltaic module. An active surface of the photovoltaic module comprises a surface of the cover glass under which photovoltaic collector cells are located. The active surface of the megasonic transducer, i.e. the surface that generates megasonic energy, is located in the same environment and overlays the active surface of the photovoltaic module.

According to the preferred design of the invention, the megasonic transducer is moved (scanned) linearly in such a way that the gap width is preserved. The scanning rate can be constant or non-linear, depending on the specific process requirements. The gap is continuously filled with fresh process fluid during this scanning movement by means of a fluid distributor mounted adjacent and parallel to the megasonic transducer. This distributor can be built into or integrated into the megasonic transducer described above.

The advantage is that the megasonic transducer and the distributor arrangement are scanned in such a way that the gap between the active surface of the megasonic transducer and the cover glass of the photovoltaic module remains constant and continuously filled with liquid, while the entire active surface of the photovoltaic module is processed. The flow of fresh process fluid through the acoustically activated gap provides acoustically induced cavitation and implosion as well as a positive flow path away from the cover glass of the photovoltaic module.

The megasonic transducer is installed in the autonomous cleaning device, which makes it possible to position the megasonic transducer above the cover glass of the photovoltaic module and to scan it at constant or alternatively non-linear speed at an optimum gap height and with the appropriate flow of process fluid for optimum cleaning.

The autonomous cleaning device is positioned on the cover glass of the photovoltaic module, preferably only with contact to the metal frame of the photovoltaic module. The autonomous cleaning device then automatically positions the megasonic transducer over the cover glass of the photovoltaic module and controls the RF power (radio frequency power) to the megasonic transducer, the process fluid flow to the distributor to fill the gap, and the scanning direction and speed to ensure a uniform cleaning process across the entire active area of the photovoltaic module.

The autonomous cleaning device contains all the equipment required to support the megasonic enhanced cleaning method described herein, including the megasonic RF generator, the fluid reservoir and flow control for the process fluid, as well as the sensing and positioning mechanism and controller. The functions of the autonomous cleaning device are controlled by an integrated microprocessor-based (Microprocessing Unit = MPU) controller. The MPU controls individual functions and states that are monitored by sensor devices so that the entire cleaning process runs autonomously. The autonomous cleaning device is powered by a rechargeable on-board power supply.

The individual modular components of the cleaning device include:
- an RF generator module (RFM):
   The RF generator module provides the RF signal at a frequency preferably in the range of 0.4 to 2.0 MHz with an amplitude (RF power) sufficient to provide 0.3 to 3.0 w/cm2 of the active area of the megasonic transducer. The frequency and power provided is controlled by the MPU control module, which is part of the RFM. The RF generator module may include circuits and sensors to monitor the performance of the module during the cleaning process. The RF generator module also includes the impedance matching network that matches the impedance of the RF generator module to the megasonic transducer.
- Megasonic Transducer and Process Fluid Manifold Module (TMM):
   This module provides the acoustic energy and process fluid to close the gap between the megasonic transducer and the cover glass of the photovoltaic module. The length of the active surface is determined by the active width of the photovoltaic module and the part of the surface that is to be cleaned in a scan. The width of the active area is determined by the scan rate and the dosing time required for the respective cleaning application. The length and width of the required area determine the active area in cm2 and thus the RF power required for sufficient sound energy for cavitation. The active area of the megasonic transducer can cover all or part of the active area of the photovoltaic module.
- Process Fluid Supply Module (PFM):
   This module includes a process fluid reservoir and a control mechanism to control the flow of process fluids from the fluid reservoir to the process fluid distributor. In addition, sensors in this module monitor the level of the process liquid tank. The process fluid flow requirements are determined by the active area of the megasonic transducer, the gap height and the scanning speed. The process fluid flow is optimized to ensure minimal use of process fluids while maintaining the filled gap under actual process conditions.
- Motion and Positioning Module (MPM)
   This module is a basic carrier unit for operative modules. This module is responsible for positioning the complete cleaning device on the frame of the photovoltaic module, the subsequent scans of the megasonic transducer/process liquid distributor module and the detection of the position of the cleaning device relative to the photovoltaic module. This module contains the mechanical elements, motors and actuators that enable placement, positioning and scanning. The non-contact sensors required to maintain the optimum and accurate gap distance between the megasonic transducer and the cover glass of the photovoltaic module are also integrated into the MPM. This module contains mechanical or other elements that allow safe placement on the photovoltaic module to ensure a stable connection and position for the cleaning device prior to initialization of the cleaning sequence. This basic support unit incorporates a power module consisting of rechargeable battery cells (accumulators) of the type such as lithium-ion or a similar light electrical energy storage technology.

The motion and positioning module is equipped with an overhead coupling device (OCD), preferably integrated in the upper part of the frame. The OCD is considered the central point of contact for the ACU. It is part of this invention that the cleaning device can be placed on the frame of the photovoltaic module and removed manually or by an extended end effector (robot arm) or by an unmanned aircraft (Unmanned Arial Vehicle = UAV). The OCD may be replaced by capture funnel features as shown below.

### • Control Communications Module (CCM):

This module contains the MPU and the associated input/output circuits as well as Random Access Memory (RAM) and Read Only Memory (ROM) memory elements. This module can also contain and support bidirectional data communication functions for the exchange of process and status data with a remote host. This module is responsible for overall control of the cleaning device, including motion/positioning, sensors, process monitoring and overall status of the cleaning device. In addition to the main MPU, this module may include a second redundant MPU with RAM and ROM and a backup power source to ensure fail-safe recovery in the event of a module or component failure. In this mode, the cleaning device goes into emergency mode, alarm mode, and then sleep mode (reduced performance) to wait for the cleaning device to resolve or recover.

The ACU (autonomous cleaning device) may have some further features that make operation more efficient. The autonomous cleaning device has a carrier housing, the upper side of which has two sockets for PODs. Preferably, two PODs are arranged on the carrier housing. Of course, it is also possible to provide only one or more than two PODs on the carrier housing. In this case, the carrier housing and/or the PODs need to be adjusted accordingly.

With the dual PODs, a continuous operation is assured which is a great advantage.

The individual POD can be held in the socket via an adapter. The POD includes a container for liquid and a compartment for a storage battery. The POD or the liquid container and/or the battery are replaceable, even while using the autonomous cleaning device on the photovoltaic modules.

I.e., in addition to the autonomous cleaning device, the drone also transports replacement batteries and/or replacement fluid containers to the autonomous cleaning device and collects the empty and replaceable battery previously located in the autonomous cleaning device and/or the empty and replaceable fluid container previously located in the autonomous cleaning device. If the battery and/or liquid container in the autonomous cleaning device is emptied during a cleaning sequence, the drone can replace it without having to transport the entire cleaning device to the base.

The individual POD has a lid, especially in the transport position, which can close the liquid container and is also equipped with capture funnels. These capture funnels can engage with corresponding holding elements on the drone, which are not shown in detail, in order to ensure that the POD can be transported and/or replaced by the drone.

At the same time, the carrier housing is also equipped with capture funnels, which can also be engaged with the corresponding holding elements of the drone in order to be able to transport and/or exchange the autonomous cleaning device by means of the drone.

The capture funnels are provided with a locking possibility to ensure that after coupling the capture funnels with the corresponding holding elements of the drone, these do not slip out of the capture funnel and the autonomous cleaning device and/or the PODs are lost or damaged as a result.

The capture funnels are preferably arranged in a hinged manner so that they can rotate about an axis, which is not shown closer. This has the advantage that the holding elements of the drone can pick up the autonomous cleaning device and/or the PODs even from a possibly different angle.

In this case, the lids of the PODs as well as the carrier housing of the autonomous cleaning device each have four capture funnels. Of course, it is possible to provide fewer or more than four capture funnels per lid and/or carrier housing (multipoint coupler assembly).

Below the carrier housing, the autonomous cleaning device has a flat stop which, in the position of use, rests against the metal frame of the photovoltaic module when the drone has placed the autonomous cleaning device there. Omi-directional rollers are arranged at a distance from an underside of the carrier housing. They ensure that the autonomous cleaning device rests evenly on the cover glass of the individual photovoltaic module.

Furthermore, there are preferably two rollers for cable arrays arranged at the carrier housing. A resonator bar which includes the megasonic transducer is held on the cable array by means of cable holders on the resonator bar. The cable arrays comprise the two elements (not shown) required for the megasonic transducer/resonator bar to function.
- a RF cable: This coaxial cable is used to provide RF (Radio Frequency) energy to the PZT crystals incorporated in the megasonic transducer, causing them to vibrate the resonator and transmit sound into the fluid;
- a fluid tube: Connects the fluid from the POD to a distributor (manifold) (not shown) located above the resonator bar. This fluid then fills the gap between the megasonic transducer and the cover glass of the photovoltaic module.

At each end, the resonator bar is attached to one resonator carriage each to ensure that the resonator bar moves evenly on the cover glass of the photovoltaic module. For this purpose the two resonator carriages are each equipped with a sliding roller.

The movement of the resonator bar with the aid of the cable arrays is effected by means of a drive for the rollers and further by means of a drive, which is responsible for a longitudinal movement of the resonator bar along a longitudinal axis of the photovoltaic modules.

To prevent the resonator bar from moving in the transport and rest position of the autonomous cleaning device, transport safety devices for the resonator bar are provided on the underside of the carrier housing. Each of the two resonator carriages has one or more detents, which engage in the transport safety devices in the transport or rest position. Preferably, two detents on each resonator carriage are arranged offset and the transport safety devices on the underside of the carrier housing are also arranged offset.

After the placement of the cleaning device, it manoeuvres along the photovoltaic module in autonomous operation.

The above mentioned features allow for a continuous cleaning process without interruption for fluid or power replenishment. Thus, an all-time operation (24/7) without human intervention is possible.

### Description of the figures

Further advantages, features and details of the invention result from the following description of preferred execution examples as well as from the drawings; these show in:
Figure 1 shows a schematic view of components of an invention system for the inspection and cleaning of cover glass of photovoltaic modules;
Figure 2 a schematic view of a base for use in the system shown in Figure 1;
Figures 3a - 3i a flow chart from the inspection of cover glasses of photovoltaic modules to the cleaning of cover glasses of photovoltaic modules; and
Figure 4 shows a plan view of an autonomous cleaning device for use in the system shown in Figure 1;
Figure 5 shows a perspective view of the autonomous cleaning device in Figure 4;
Figure 6 shows another perspective view of the autonomous cleaning device in Figure 4 with an extracted resonator bar;
Figure 7 shows another perspective view of the autonomous cleaning device in Figure 4;
Figure 8 a schematic view of a megasonic transducer for use in the autonomous cleaning device shown in Figure 4 and in the system shown in Figure 1;
Figure 9 shows a functional block diagram, in particular of the components of the autonomous cleaning device;
Figure 10 shows the autonomous cleaning device at different angled photovoltaic modules.

### Embodiment

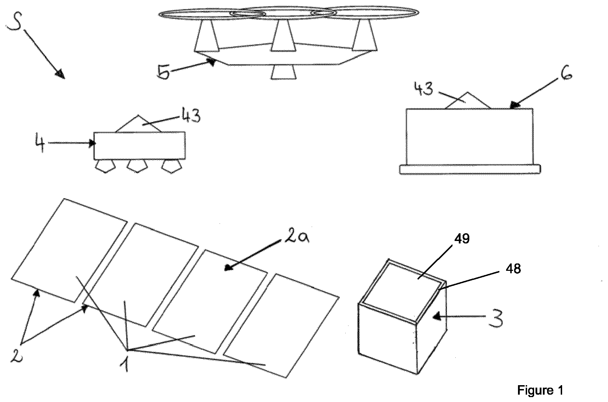

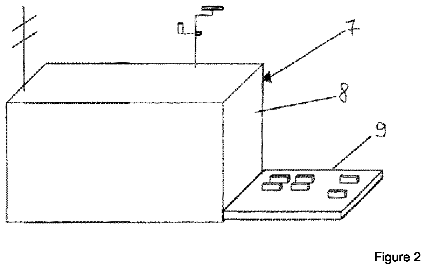

Figure 1 shows a system S for checking and cleaning cover glasses 1 of photovoltaic modules 2, 2a. In addition to the photovoltaic modules 2, 2a to be cleaned, System S comprises a comparison device 3 (Solar Power Comparator = SPC), an inspection module 4 (Airborne Inspection Unit = AIU), a drone 5 (Flight System Platform = FSP), one or more autonomous cleaning device(s)/unit(s) 6 (Autonomous Cleaning Unit = ACU) for cleaning the cover glasses 1 of photovoltaic modules 2, 2a and a base 7 (Flight Operations Center = FOC) shown in Figure 2.

The comparison device 3 is arranged in the area of photovoltaic modules 2, 2a and serves to compare the solar field yield of photovoltaic modules 2 with a reference photovoltaic cell 48 preferably arranged in the comparison device 3. The comparison device 3 compares the efficiency of photovoltaic module 2, 2a or field with the efficiency of this reference photovoltaic cell 48 of the same type in the comparison device 3, which is however "clean". This means that a reference state of a photovoltaic module is read from the reference photovoltaic cell 48, which represents an optimal state (= clean state) of a cover glass 1 of a photovoltaic module 2. The reference photovoltaic cell 48 is arranged under a cover 49, which is detachably connected to the comparison device 3 in an unspecified manner, and can be opened or removed to release the reference photovoltaic cell 48 when the comparison measurement is to be performed.

The comparison device 3 is arranged under identical process parameters as the photovoltaic modules 2, 2a, whereby the comparison device 3 collects and supplies information on contamination of the photovoltaic modules 2, 2a and their cover glasses 1 under the respective conditions of the process parameters.

The inspection module 4 is used for "mapping", i.e. the mapping of the individual photovoltaic modules 2, 2a or the arrangement of the entire photovoltaic modules. It provides information on where exactly the photovoltaic modules 2, 2a are arranged.

The drone 5 performs inspection and imaging flights with the inspection module 4. The drone 5 also serves to transport the autonomous cleaning device 6 to the photovoltaic modules 2, 2a and back to the base 7 after a cleaning sequence has been completed.

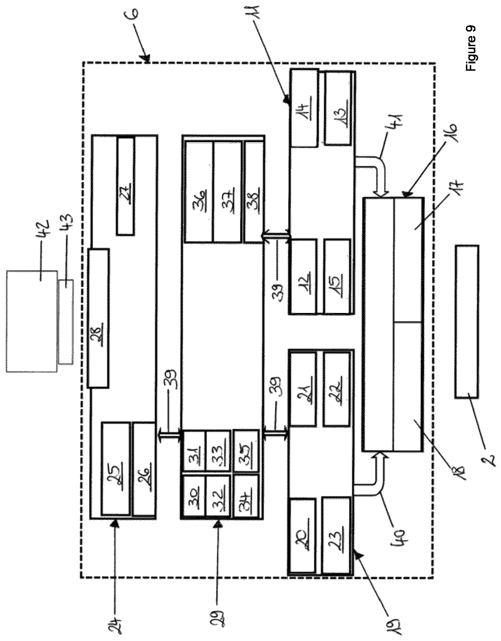

The autonomous cleaning device 6 is used to clean the cover glasses 1 of the photovoltaic modules 2, 2a. For this purpose, the autonomous cleaning device 6 has the following elements shown in Figure 9:
- an RF generator module (RFM) 11 with an MPU control module 12, circuits and sensors 13, an impedance matching network 14 and an RF generator 15,
- a megasonic transducer and process fluid manifold module (TMM) 16 with a megasonic transducer 17 and a liquid distributor 18,
- a process fluid supply module (PFM) 19 with a process fluid reservoir 20 and a control mechanism 21, sensors 22 and pumps/valves 23,
- a motion and positioning module (MPM) 24 as a base carrier unit for operative modules such as motors and actuators, sensors, module frame lock and interlock 25, XYZ motion devices 26 and column control and sensors 27. Further, the motion and positioning module 24 comprises an overhead coupling device (OCD) 28 preferably integrated in the upper part of the frame. The OCD 28 may be replaced by capture funnel features as described in correspondence to the detailed description of the autonomous cleaning device 6.3 further below. I.e., there are multiple coupling points for the drone 5 to the autonomous cleaning device and the drone 5 to PODs (see below) and not jus one single point.
- a control communications module (CCM) 29 comprising a main MPU 30, associated input/output circuits and main memory elements 32, main fixed value memory elements 34 and bidirectional data communication functions 36 together with power source 37 in the form of preferably replaceable batteries and a backup power source 38. In addition to the main MPU 30, a second redundant MPU 31 with reserve RAM 33 and ROM 35 can be provided.

The basis 7 initiates flight operation of the drone 5 and deployment of the drone 5 with payload through the inspection module 4. Furthermore, it serves to store and provide the autonomous cleaning devices 6, the drone 5 and the inspection module 4 in idle mode. For this purpose, the base 7 preferably has a kind of hangar 8 in which the autonomous cleaning devices 6, the drone 5 and the inspection module 4 can be stored in idle mode. Furthermore, the base 7 has a landing platform 9 on which the autonomous cleaning devices 6 and the inspection module 4 can be provided when they are needed to be simply picked up by the drone 5.

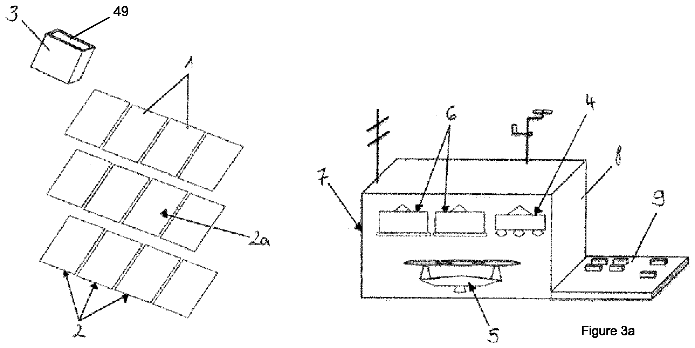

The flow chart from the inspection of cover glasses 1 of photovoltaic modules 2, 2a by the comparison device 3 to the cleaning of cover glasses 1 of photovoltaic modules 2, 2a by autonomous cleaning devices 6 is shown schematically in figures 3a to 3i.

According to Figure 3a, an initial state of system S for checking and cleaning cover glasses 1 of photovoltaic modules 2, 2a is shown. As mentioned above, the comparison device 3 is located near the photovoltaic modules 2, 2a to determine the degree of contamination of the cover glasses 1. For this purpose, the comparison device 3 compares at regular intervals a solar field yield of the photovoltaic modules 2, 2a with a solar yield of its reference photovoltaic cell 48. For this purpose, the cover 49 is temporarily removed and an efficiency of the conversion of the radiation energy of sunlight into usable electricity in the "clean" reference photovoltaic cell can be compared with the efficiency of the conversion of the radiation energy of sunlight into usable electricity in the photovoltaic module 2, 2a. If a predetermined degree of pollution of the photovoltaic module 2, 2a is reached, a cleaning sequence is initiated.

In base 7 the autonomous cleaning devices 6, the drone 5 and the inspection module 4 are in idle mode as long as no mapping of all photovoltaic modules and/or a cleaning sequence has been triggered by the comparison device 3.

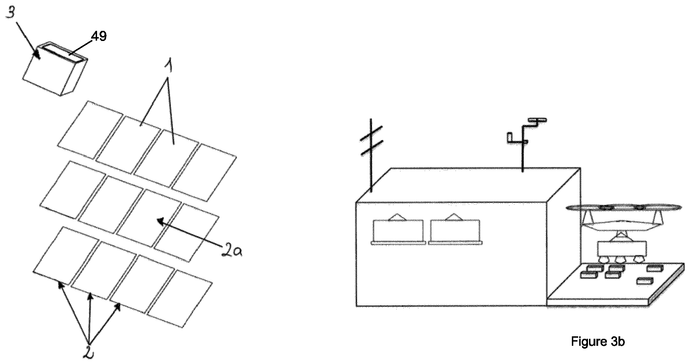

The explanations on the reference numbers for Figure 3a also apply to Figures 3b to 3ij. This applies in particular if the same features have the same reference numbers. Therefore, a repetition of all features described in Figure 3a is omitted.

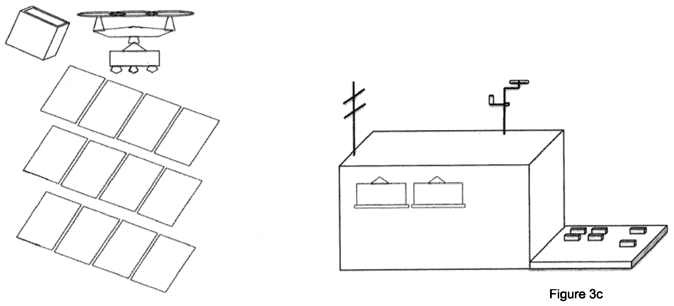

First of all, the location and locations of all photovoltaic modules must be mapped. The inspection module 4 is placed in landing platform 9 of base 7 and can be taken there by means of the drone 5 (see Figure 3b). The drone 5 then flies with the inspection module 4 over all photovoltaic modules to precisely map their position and location (see Figure 3c). The data is returned to the base 7 for analysis and programming of the cleaning sequence with one or more autonomous cleaning devices 6.

At regular intervals, a comparison measurement is carried out by the comparison device 3. If a predetermined degree of contamination of the cover glasses 1 of the photovoltaic modules 2, 2a is reached and a cleaning sequence is initiated, the base 7 initiates a flight operation of the drone 5 and an operation of the drone 5 with the autonomous cleaning devices 6.

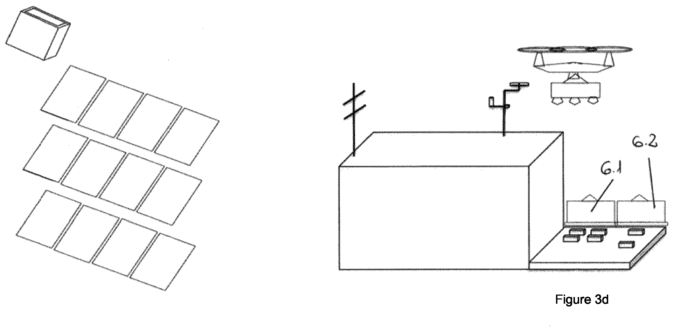

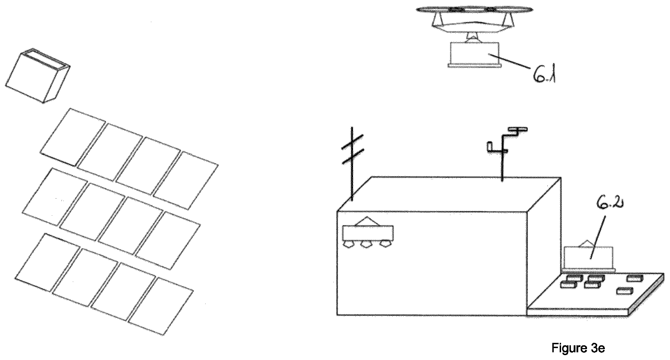

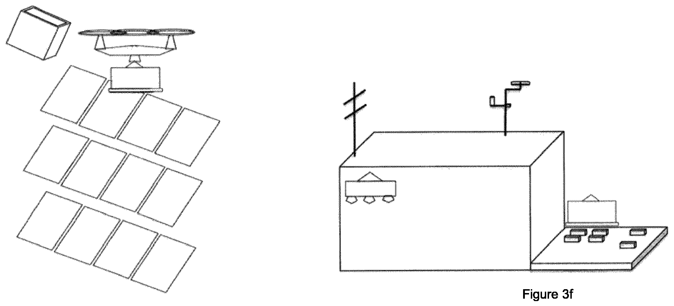

According to Figure 3d, the autonomous cleaning devices 6 are now provided in landing platform 9 of base 7. At the same time the drone 5 has finished its inspection and imaging flights and the drone 5 flies with the inspection module 4 back to base 7 and delivers the inspection module 4 again to landing platform 9 (see figure 3e) where it is stored. The drone 5 then picks up the first autonomous cleaning device 6.1 (see Figure 3e) to fly it to a first position on the photovoltaic modules 2 (see Figure 3f).

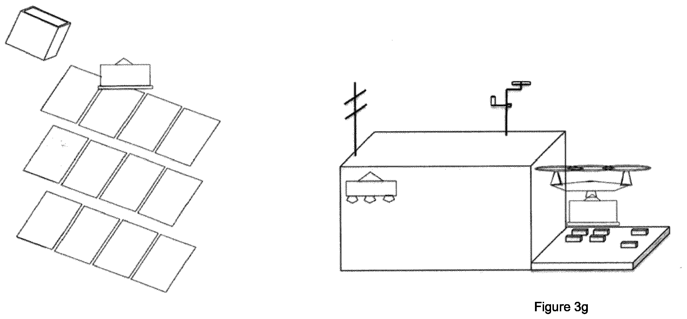

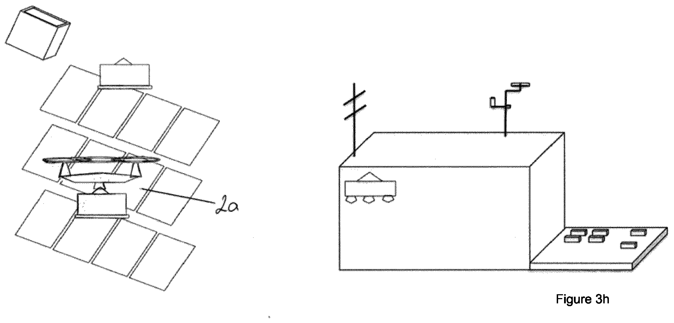

The drone 5 then returns to base 7 to pick up another autonomous cleaning device 6.2 (see Figure 3g) and fly it to another position on photovoltaic modules 2a (see Figure 3h). Only two autonomous cleaning devices 6.1 and 6.2 are shown. Of course, system S can also include a single autonomous cleaning device 6 or more than two autonomous cleaning devices 6.

The steps of figures 3d to 3i are carried out until all cover glasses 1 of all photovoltaic modules 2 are cleaned. Once the autonomous cleaning device 6 has finished its work and does not need to be flown to another photovoltaic module 2, it can be flown back from drone 5 to landing platform 9 or base 7, where it is stored, until another cleaning sequence is initiated.

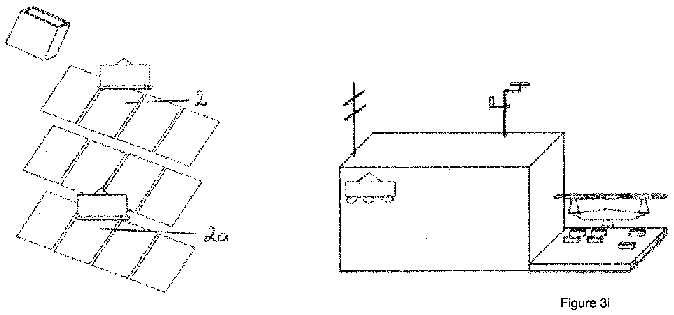

The drone 5 then returns to base 7 (see Figure 3i) to recharge and wait for another sequence. If in the meantime the energy source in the form of batteries 37 and/or liquid container 20 of one of the autonomous cleaning devices 6 has been emptied, the drone will return to the corresponding autonomous cleaning device 6 with a replaceable battery and/or liquid container, the battery 37 and/or liquid container 20 will be replaced and the drone 5 will fly back to the base with the empty battery 37 and/or liquid container 20.

Figure 9 includes, in addition to the features mentioned above, the indication of data transfer along arrows 39, the flow of process fluid along arrow 40 and the flow of RF energy along arrow 41. The functional block diagram further shows a feeder 42 and a coupling 43 through which the autonomous cleaning device 6 can be coupled to the feeder 42. The feeder 42 can comprise a manual handling or an extended end effector (robot arm) or also an unmanned aircraft (Unmanned Arial Vehicle = UAV), via which the autonomous cleaning device 6 can be placed on a frame of the photovoltaic module 2 and also removed from there, even if the drone 5 is preferably used for this purpose in the present design example.

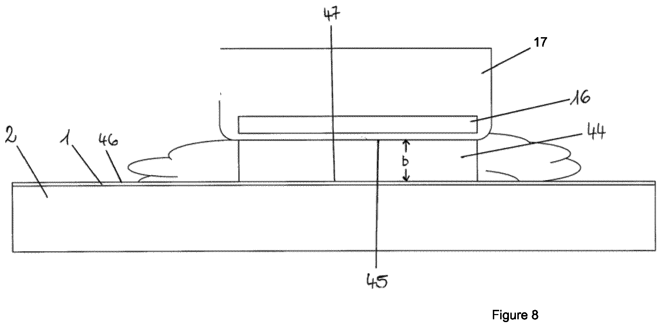

Referring to Figure 8, the function of the inventive method and the device can be explained as follows:
The method of the present invention introduces a new and unique, non-contact, damage-free physical force process for the in-situ cleaning of cover glasses 1 of photovoltaic modules 2.

If a contamination of the cover glasses 1 of the photovoltaic modules 2, 2a was detected by the comparison device 3, a cleaning sequence is initiated. This means that the drone 5 picks up the first autonomous cleaning device 6.1 to fly it to a first position on the photovoltaic modules 2. The drone 5 then returns to the base to pick up the second autonomous cleaning device 6.2 if necessary and fly it to a second position on the photovoltaic modules 2a. If further cleaning devices are present, the process is repeated until all autonomous cleaning devices are distributed on the cover glasses 1 of the photovoltaic modules 2 and 2a.

Once the autonomous cleaning devices 6.1 and 6.2 have arrived at the photovoltaic modules 2, 2a, they are positioned on the respective cover glass 1 of the photovoltaic module 2, 2a, preferably only with contact to a metal frame of the photovoltaic module 2, 2a. In the following, the method is described only for one autonomous cleaning device 6.1. However, the method is identical for all existing autonomous cleaning devices.

The autonomous cleaning device 6.1 automatically positions its megasonic transducer 17 over the cover glass 1 of the photovoltaic module 2 and regulates the RF power to the megasonic transducer 17, the process fluid flow from the liquid container 20 to the distributor 18 for filling a gap 44 and the scanning direction and speed to ensure a uniform cleaning process over an entire active surface 47 of the photovoltaic module 2.

The autonomous cleaning device 6.1 contains all the equipment required to support the cleaning process as described above.

If the autonomous cleaning device 6.1 or the megasonic transducer 17 has been positioned above the cover glass 1 of the photovoltaic module 2, gap 44 with a predetermined width b between the cover glass 1 of the photovoltaic module 2 and an active surface 45 of the megasonic transducer 17 is formed relative to the cover glass 1. The active surface 45 of the megasonic transducer 17 is preferably flat and thus supports the formation of a gap 44 of approximately uniform width b. Gap 44, for example, can have a width of approx. 1mm. In particular, the active area 45 of the megasonic transducer 17 is a bonded PZT crystal area (Piezo materials based on lead-zirconate-titanate). The megasonic transducer 17 may comprise a piezoelectric crystal arranged to emit megasonic oscillations or megasonic vibrations through the active surface 45 when activated by the application of a high frequency signal. Instead of a piezoelectric crystal, the megasonic transducer 17 can comprise a variety of piezoelectric crystals arranged along the active surface 45.

The gap 44 is then at least partially filled with a process fluid from the liquid container 20. The process fluid bridges the gap 44 between a surface 46 of the cover glass 1 of the photovoltaic module 2 and the active surface 45 of the megasonic transducer 17 in at least part of the gap 44. The process fluid completely fills the gap 44 between the cover glass 1 of the photovoltaic module 2 and the megasonic transducer 17.

According to the inventive method, the megasonic transducer 17 is controlled to transfer megasonic oscillations into the process fluid in gap 44 and to at least part of cover glass 1 of photovoltaic module 2. Thus, the process fluid filling the gap 44 is used to transfer the megasonic oscillations or megasonic vibrations emitted by the megasonic transducer 17 to the surface 46 of cover glass 1 of the photovoltaic module 2 when activated.

By generating megasonic oscillations or megasonic vibrations with a frequency of at least 400 kHz and coupling the megasonic oscillations or megasonic vibrations into the process fluid, a particularly uniform and uniform sound field can be generated. In addition, the megasonic energy can be efficiently transferred to the surface 46 of cover glass 1 of photovoltaic module 2 in this way. It is assumed that, particularly depending on the properties of the fluid, a density of megasonic energy corresponding to about 0.5 w/cm2 of the active area 45 of the megasonic transducer 17 is sufficient to generate cavitation bubbles near the surface 46 of the photovoltaic module cover glass 1, and in that, upon collapse of the cavitation bubbles, local shock waves are emitted which efficiently remove undetected particles and/or impurities adhering to the surface 46 of cover glass 1 of the photovoltaic module 2 without damaging the surface 46 of the cover glass 1. Furthermore, the detached particles are transported away from the surface 46 of cover glass 1 due to cavitation shock waves and the flow of process fluid through gap 44 and the surface 46 of cover glass 1 of photovoltaic module 2 is not impaired or damaged.

Preferably, the megasonic transducer 17 is held in a substantially horizontal position above the cover glass 1 of the photovoltaic module 2. An active surface 47 of photovoltaic module 2 comprises a surface 46 of cover glass 1 under which photovoltaic collector cells are located. The active area 45 of the megasonic transducer 17, i.e. the area generating megasonic energy, is located in the same environment and overlays the active area 47 of the photovoltaic module 2.

According to the preferred design of the invention, the megasonic transducer 17 is moved (scanned) linearly in such a way that the width b of the gap 44 is retained. The scanning rate can be constant or non-linear, depending on the specific process requirements. The gap 44 is continuously filled with fresh process fluid from the liquid container 20 during this scanning movement by means of the fluid distributor 18 mounted adjacent and parallel to the megasonic transducer 17. This distributor 18 can be installed in the described megasonic transducer 17 or be part of the megasonic transducer 17 from the beginning.

The advantage is that the megasonic transducer 17 and the distributor 18 are moved in such a way that the gap 44 between the active surface 45 of the megasonic transducer 17 and the cover glass 1 of the photovoltaic module 2 remains constantly and continuously filled with liquid, while the entire active surface 47 of the photovoltaic module 2 is processed. The flow of fresh process fluid through the acoustically activated gap provides acoustically induced cavitation and implosion of the cavitation bubbles as well as a positive flow path away from cover glass 1 of photovoltaic module 2.

If the cover glass 1 of the photovoltaic module 2 has been completely cleaned by the autonomous cleaning device 6.1, the autonomous cleaning device 6.1 can be detached from the frame of the photovoltaic module 2 and transported back to the base 7 by means of the drone 5 and stored and charged in the housing 10 of the base 7 until the next cleaning sequence.

The comparison device 3 now again takes over the task of monitoring the degree of contamination of the cover glasses 1 of the photovoltaic modules 2, 2a and triggering a new cleaning sequence when a certain degree of contamination is reached.

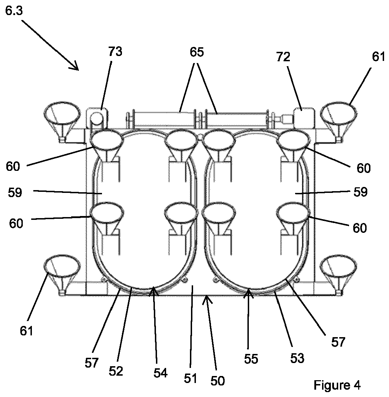

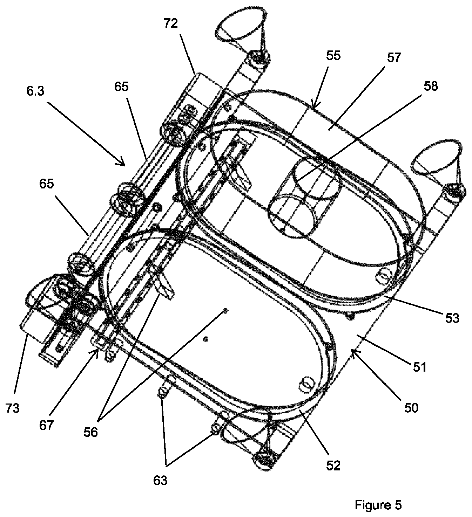

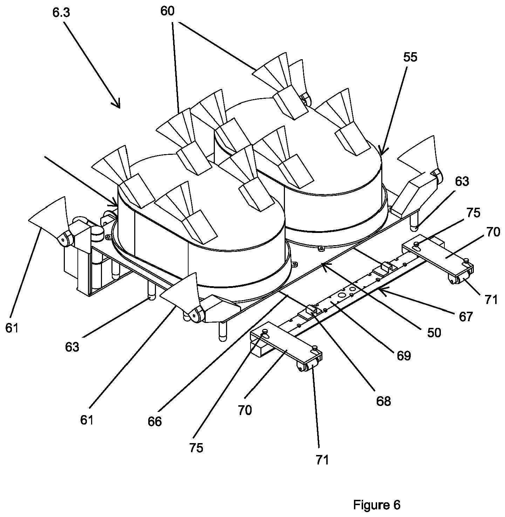

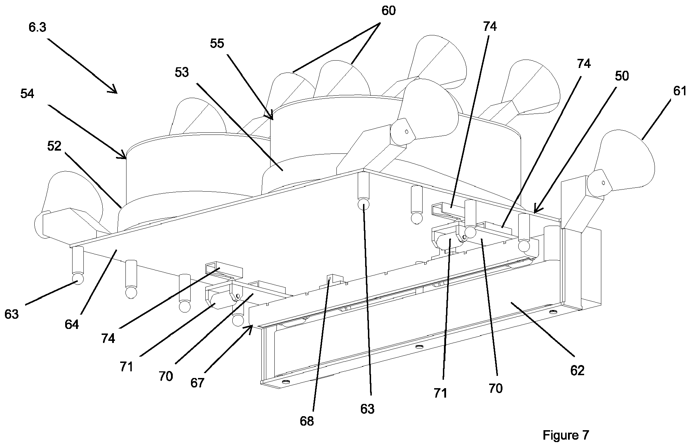

Figure 4 to 7 show the autonomous cleaning device 6 in more detail. The explanations given for the reference numbers in Figures 1 to 3 also apply to Figures 4 to 7, especially if the same features have been given the same reference numbers. For this reason, all the characteristics described in Figures 1 to 3 are not repeated. Furthermore, it is pointed out that the above description for the handling of the cleaning device 6, 6.1 and 6.2 was of a general nature with regard to the photovoltaic modules 2, 2a and the following description goes into more detail about the handling of the autonomous cleaning device 6.3 with regard to the photovoltaic modules 2, 2a.

In addition to the features already listed above for cleaning device 6, 6.1 and 6.2, cleaning device 6.3 shown in Figures 4 to 7 shall also include the following features.

The cleaning device 6.3 has a carrier housing 50, on the upper side 51 of which, i.e. the surface of the carrier housing 50 facing away from the photovoltaic module 2, 2a in the position of use, preferably has two sockets 52 and 53 for one POD 54 and 55 respectively. A POD is a casing or housing forming part of a vehicle, as a) a streamlined external housing that encloses engines, machine guns, or fuel or b) a detachable compartment on a spacecraft for carrying personnel or instrumentation. The PODs 54 and 55 respectively have electrical and hydraulic connections to the carrier housing 50 of the autonomous cleaning device 6.3 (not shown).

Preferably, two PODs are arranged on the carrier housing 50. Of course, it is also possible to provide only one or more than two PODs on the carrier housing 50. In this case, the carrier housing 50 and/or the PODs need to be adjusted accordingly.

The individual POD 54 or 55 can be held in the socket 52 or 53 via an adapter 56. The POD 54 or 55 includes a container 57 for liquid and/or a compartment 58 for a storage battery. The electricity from the POD battery powers the controllers, the motion and positioning motor, the megasonic transducer/resonator bar positioning drive and the RF generator that makes the radio frequency signal. The POD 53 or 54 or the liquid container 57 and/or the battery are replaceable, even while using the cleaning device 6.3 on the photovoltaic modules 2, 2a.

I.e., in addition to the autonomous cleaning device 6.3, the drone 5 also transports replacement batteries and/or replacement fluid containers to the autonomous cleaning device 6.3 and collects the empty and replaceable battery previously located in the autonomous cleaning device 6.3 and/or the empty and replaceable fluid container 57 previously located in the autonomous cleaning device 6.3. If the battery and/or liquid container 57 in the autonomous cleaning device 6.3 is emptied during a cleaning sequence, the drone 5 can replace it without having to transport the entire autonomous cleaning device 6.3 to the base 7.

The individual POD 54 or 55 still has a lid 59, especially in the transport position, which can close the liquid container 57 and is also equipped with capture funnels 60. These capture funnels 60 can engage with corresponding holding elements on the drone 5, which are not shown in detail, in order to ensure that the POD 54 or 55 can be transported and/or replaced by the drone 5.

At the same time, the carrier housing 50 is also equipped with capture funnels 61, which can also be engaged with the corresponding holding elements of the drone 5 in order to be able to transport and/or exchange the autonomous cleaning device 6.3 by means of the drone 5.

The capture funnels 60 or 61 are provided with a locking possibility not shown in detail to ensure that after coupling the capture funnels 60 or 61 with the corresponding holding elements of the drone 5, these do not slip out of the capture funnel 60 or 61 and the autonomous cleaning device 6.3 and/or the PODs 54 or 55 are lost or damaged as a result.

The capture funnels 60 or 61 are preferably arranged in a hinged manner so that they can rotate about an axis, which is not shown closer. This has the advantage that the holding elements of the drone 5 can pick up the autonomous cleaning device 6.3 and/or the PODs 54 or 55 even from a possibly different angle.

In this case, the lids 59 of the PODs 54 and 55 as well as the carrier housing 50 of the autonomous cleaning device 6.3 each have four capture funnels 60 and 61. Of course, it is possible to provide fewer or more than four capture funnels per lid and/or carrier housing (multipoint coupler assembly).

Below the carrier housing 50, the autonomous cleaning device 6.3 has a flat stop 62, which, in the position of use, rests against the metal frame of the photovoltaic module 2, 2a when the drone 5 has placed the autonomous cleaning device 6.3 there. Omi-directional rollers 63 are arranged at a distance from an underside 64 of the carrier housing 50. They ensure that the autonomous cleaning device 6.3 rests evenly on the cover glass 1 of the individual photovoltaic module 2, 2a.

On the side of the stop 62 opposite the metal frame of the photovoltaic module 2. 2a in the position of use, there are preferably two rollers 65 for cable arrays 66. A resonator bar/megasonic transducer 67 is held on the cable arrays 66. This is done by means of cable holders 68 on one side 69 of the megasonic transducer/resonator bar 67. The cable arrays 66 comprise the two elements (not shown) required for the megasonic transducer/resonator bar 67 to function.
- a RF cable: This coaxial cable is used to provide RF (Radio Frequency) energy to the PZT crystals incorporated in the megasonic transducer, causing them to vibrate the resonator and transmit sound into the fluid;
a fluid tube: Connects the fluid from the POD 54 or 55 respectively to a distributor (manifold) (not shown) located above the resonator bar 67. This fluid then fills the gap between the megasonic transducer and the cover glass of the photovoltaic module 2, 2a.

At each end, the resonator bar 67 is attached to one resonator carriage 70 each to ensure that the resonator bar 67 moves evenly on the cover glass 1 of the photovoltaic module 2, 2a. For this purpose, the two resonator carriages 70 are each equipped with a sliding roller 71.

The movement of the resonator bar 67 with the aid of the cable arrays 66 is effected by means of a drive 72 for the rollers 65 and further by means of a drive 73, which is responsible for a longitudinal movement of the resonator bar 67 along a longitudinal axis of the photovoltaic modules 2, 2a.

To prevent the resonator bar 67 from moving in the transport and rest position of the autonomous cleaning device 6.3, transport safety devices 74 for the resonator bar 67 are provided on the underside 64 of the carrier housing 50. Each of the two resonator carriages 70 has one or more detents 75, which engage in the transport safety devices 74 in the transport or rest position. Preferably, two detents 75 on each resonator carriage 70 are arranged offset and the transport safety devices 74 on the underside 64 of the carrier housing 50 are also arranged offset.

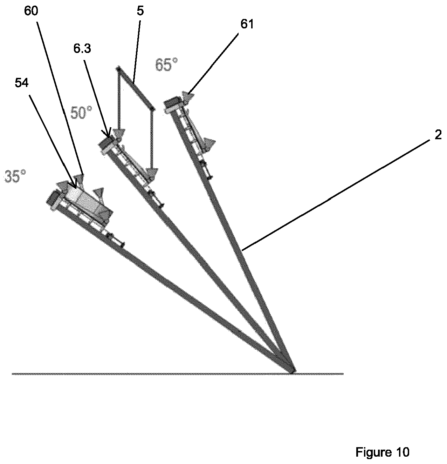

As far as the mode of operation is concerned, it is also referred to the detailed description above. However, it should also be mentioned that, having arrived at the photovoltaic modules 2, 2a, the autonomous cleaning device 6.3 is positioned on the respective cover glass 1 of the photovoltaic module 2, 2a by placing the omni-directional rollers 63 on the cover glass 1 of the photovoltaic module 2, 2a and the stop 62 against the metal frame of the photovoltaic module 2, 2a. The presence of the stop 62 makes it possible to use the autonomous cleaning device 6.3 at different angles of inclination of each photovoltaic module 2, 2a, as shown in Figure 10.

The autonomous cleaning device 6.3 is positioned on the cover glass 1 of the photovoltaic module 2, 2a, preferably only with contact to the metal frame of the photovoltaic module 2, 2a. The autonomous cleaning device 6.3 then automatically positions the megasonic transducer 17/resonator bar 67 over the cover glass 1 of the photovoltaic module 2, 2a and controls the RF power (radio frequency power) to the megasonic transducer 17/resonator bar 67, the process fluid flow to the distributor to fill the gap 44, and the scanning direction and speed to ensure a uniform cleaning process across the entire active area 47 of the photovoltaic module 2, 2a.

### Reference List

| | | | | | |
|---|---|---|---|---|---|
| 1 | cover glass | 34 | main fixed value memory elements | 67 | resonator bar |
| 2 | photovoltaic module | 35 | reserve fixed value memory element | 68 | cable holder |
| 3 | comparison device | 36 | data communication functions | 69 | side |
| 4 | inspection module | 37 | energy source | 70 | resonator carriage |
| 5 | drone | 38 | backup power source | 71 | sliding roller |
| 6 | cleaning device (ACU) (overview) | 39 | arrow | 72 | drive |
| 7 | base (FOC) | 40 | arrow | 73 | drive |
| 8 | hanger | 41 | arrow | 74 | transport safety device |
| 9 | landing platform | 42 | allocator | 75 | detens |
| 10 | | 43 | clutch | | |
| 11 | RF generator module | 44 | fissure | | |
| 12 | MPU control module | 45 | surface | | |
| 13 | circuits and sensors | 46 | Surface | | |
| 14 | impedance matching network | 47 | surface | | |
| 15 | RF generator | 48 | reference photovoltaic cell | | |
| 16 | megasonic transducer and process liquid distributor module (TMM) | 49 | cover | | |
| 17 | megasonic transducer | 50 | carrier housing | | |
| 18 | distributor | 51 | upper side | | |
| 19 | process liquid supply module | 52 | socket | | |
| 20 | process liquid container | 53 | socket | | |
| 21 | control mechanism | 54 | POD | | |
| 22 | sensors | 55 | POD | | |
| 23 | pumps/valves | 56 | adapter | | |
| 24 | motion and positioning module | 57 | fluid container | | |
| 25 | modular frame lock and locking system | 58 | compartment | S | system |
| 26 | XYZ motion devices | 59 | lid | b | width |
| 27 | column control and sensors | 60 | capture funnel | | |
| 28 | overhead coupling device | 61 | capture funnel | | |
| 29 | control communication module | 62 | stop | | |
| 30 | main CPU | 63 | rollers | | |
| 31 | redundant MPU | 64 | underside | | |
| 32 | main memory elements | 65 | roller | | |
| 33 | reserve memory element | 66 | cable array | | |

## Claims

1. System for cleaning cover glasses (1) of photovoltaic modules (2, 2a) comprising an autonomous cleaning device (6, 6.1, 6.2, 6.3) comprising a megasonic transducer (17, 67), the system further comprising a drone (5),
a comparison device (3) and an inspection module (4) to map the photovoltaic module field and the photovoltaic modules (2, 2a), providing reference points for the collection and return points for the autonomous cleaning device (6, 6.1, 6.2, 6.3),
**characterized in that**
the comparison device compares the efficiency of a photovoltaic module field with the efficiency of a clean reference photovoltaic cell (48),
a flow of process fluid through an acoustically activated gap (44) between the cover glass (1) of the photovoltaic module (2, 2a) and an active surface (45) of the megasonic transducer (17, 67) is provided for the particles/impurities to be transported away from the cover glass (1) of the photovoltaic module (2, 2a) and the autonomous cleaning device (6, 6.1, 6.2, 6.3) and the inspection module (4) are separately transportable to the photovoltaic modules (2, 2a) by means of the drone (5).

2. System according to claim 1, **characterized in that** the drone (5) can transport the inspection module (4) or the autonomous cleaning device (6, 6.1, 6.2, 6.3) from a base (7) to the photovoltaic module (2) or from the photovoltaic module (2) and a further photovoltaic module (2a) and back to the base (7).

3. System according to one of the previous claims 1 or 2, **characterized in that** the autonomous cleaning device (6, 6.1, 6.2) comprises an exchangeable battery (37) and an exchangeable liquid container (20).

4. System according to one of the previous claims 1 to 2, **characterized in that** the autonomous cleaning device (6.3) comprises one exchangeable pod (54, 55) with a container (57) for liquid and/or a compartment (58) for a storage battery.

5. System according to claim 3 or 4, **characterised in that** the drone (5) supplies the autonomous cleaning device (6, 6.1, 6.2), a further exchangeable battery and/or a further exchangeable liquid container and the exchangeable battery (37) and/or the exchangeable liquid container (20) can be delivered or collected by means of the drone (5).

6. System according to claim 4 or 5, **characterised in that** the drone (5) supplies the autonomous cleaning device (6.3), a further exchangeable pod and/or a further exchangeable container for liquid and/or a compartment for a storage battery and/or the exchangeable POD (54, 55) with the container (57) for liquid and/or a compartment (58) for a storage battery can be delivered or collected by means of the drone (5).

7. System according to one of the previous claims 1 to 6, **characterized in that** information from the drone (5), the autonomous cleaning device (6, 6.1, 6.2, 6.3), the base (7), the inspection module (4) and the comparison device (3) can be collected and evaluated in a computer.

8. System according to one of the previous claims 1 to 7, **characterized in that** the autonomous cleaning device (6, 6.1, 6.2, 6.3) comprises the following:
- an RF (Radio Frequency) generator module (11),
- a megasonic transducer and process liquid distributor module (16),
- a process liquid supply module (19),
- a motion and positioning module (24) and
- a control communication module (29).

9. System according to one of the previous claims 1 to 8, **characterized in that** the drone (5) detects and transmits by means of a process parameter position and location of the photovoltaic modules (2, 2a) respective to the inspection module (4).

10. System according to one of the previous claims 1 to 9, **characterized in that** one of the comparison devices (3) is arranged under identical process parameters as the photovoltaic modules (2, 2a), the comparison device (3) detecting and transmitting information about contamination of the photovoltaic modules (2, 2a) and their cover glasses (1) under the respective conditions of the process parameters.

11. System according to claim 10, **characterized in that** a reference photovoltaic cell (48) with a cover (49) is provided, a reference state of a photovoltaic module being readable from the reference photovoltaic cell (48).

12. System according to claim 10 or 11, **characterized in that** the cover (49) is detachably connected to the comparison device (3).

13. Method for cleaning a cover glass (1) of a photovoltaic module (2, 2a) by means of an autonomous cleaning device (6, 6.1, 6.2, 6.3) comprising the following steps:
- an inspection module (4) detects and transmits the position and location of the photovoltaic modules (2, 2a);
- a comparison device (3) detects and transmits information about contamination of the photovoltaic modules (2, 2a) and their cover glasses (1);
- if a predetermined degree of contamination of the cover glasses (1) of the photovoltaic modules (2, 2a) is reached, a cleaning sequence is initiated,
- a first autonomous cleaning device (6.1, 6.3) is transported to a first cover glass (1) of a first photovoltaic module (2);
- the first autonomous cleaning device (6.1, 6.3) cleans the first cover glass (1) of the first photovoltaic module (2); wherein a megasonic transducer (17, 67) is positioned relative to a first cover glass (1) of a first photovoltaic module (2),
- a gap (44) having a predetermined width (b) is formed between the cover glass (1) of the photovoltaic module (2) and an active surface (45) of the megasonic transducer (17, 67),
- the gap (44) is at least partially filled with a process fluid,
- megasonic oscillations are transmitted by the megasonic transducer (17, 67) into the process fluid in the gap (44) and to at least part of the cover glass (1) of the photovoltaic module (2),
- cavitation bubbles are generated in a region of a surface (47) of the cover glass (1) of the photovoltaic module (2), wherein upon collapse of the cavitation bubbles local shock waves are emitted to dislodge the particles/impurities adhering to the surface (47) of the cover glass (1),
- by the flow of the process fluid through the gap (44), the particles/impurities are transported away from the surface (47) of the cover glass (1) of the photovoltaic module (2)
- the first autonomous cleaning device (6.1, 6.3) is transported to a further cover glass of a further photovoltaic module (2) or to a base (7);
- repeating steps 4 to 6 with the same or further autonomous cleaning devices (6, 6.1, 6.2, 6.3) until all cover glasses (1) of all photovoltaic modules (2, 2a) are cleaned.

## Patentansprüche

1. System zur Reinigung von Deckgläsern (1) von Photovoltaik-Modulen (2, 2a) mit einer autonomen Reinigungsvorrichtung (6), die einen Megaschallwandler (17, 67) umfasst, wobei das System außerdem eine Drohne (5), eine Vergleichsvorrichtung (3) und ein Inspektionsmodul (4) umfasst, um das Feld der Photovoltaik-Module und die Photovoltaik-Module (2, 2a) zu kartieren, wobei Referenzpunkte für die Sammel- und Rückgabepunkte für die autonome Reinigungsvorrichtung (6, 6.1, 6.2, 6.3) bereitgestellt werden,
**dadurch gekennzeichnet,**
**dass** die Vergleichsvorrichtung den Wirkungsgrad eines Photovoltaik-Modulfeldes mit dem Wirkungsgrad einer sauberen Referenz-Photovoltaikzelle (48) vergleicht, dass ein Fluss von Prozessflüssigkeit durch einen akustisch aktivierten Spalt (44) zwischen dem Deckglas (1) des Photovoltaik-Moduls (2, 2a) und einer aktiven Oberfläche (45) des Megaschallwandlers (17, 67) vorgesehen ist, damit die Partikel/Verunreinigungen vom Deckglas (1) des Photovoltaik-Moduls (2, 2a) abtransportiert werden und die autonome Reinigungsvorrichtung (6, 6.1, 6.2, 6.3) und das Inspektionsmodul (4) sind mittels der Drohne (5) separat zu den Photovoltaik-Modulen (2, 2a) transportierbar.

2. System nach Anspruch 1, **dadurch gekennzeichnet, dass** das Inspektionsmodule (4) oder die autonome Reinigungsvorrichtung (6, 6.1, 6.2, 6.3) von einer Basis (7) zu dem Photovoltaik-Modul (2) oder von dem Photovoltaik-Modul (2) und einem weiteren Photovoltaik-Modul (2a) und zurück zur Basis (7) mittels der Drohne (5) transportierbar sind.

3. System nach Anspruch 1 oder 2, **dadurch gekennzeichnet, dass** die autonome Reinigungsvorrichtung (6, 6.1, 6.2) einen austauschbaren Akku (37) und einen austauschbaren Flüssigkeitsbehälter (20) umfasst.

4. System nach einem der vorigen Ansprüche 1 bis 2, **dadurch gekennzeichnet, dass** die autonome Reinigungsvorrichtung (6.3) einen austauschbaren pod (54, 55) mit einem Behälter (57) für Flüssigkeit und/oder einem Fach (58) für einen Akku umfasst.

5. System nach Anspruch 3 oder 4, **dadurch gekennzeichnet, dass** die Drohne (5) die autonome Reinigungsvorrichtung (6, 6.1, 6.2), eine weitere Wechselbatterie und/oder einen weiteren Wechselflüssigkeitsbehälter bereitstellt und die Wechselbatterie (37) und/oder der Wechselflüssigkeitsbehälter (20) mittels der Drohne (5) lieferbar bzw. abholbar ist.

6. System nach Anspruch 4 oder 5, **dadurch gekennzeichnet, dass** die Drohne (5) die autonome Reinigungsvorrichtung (6.3), einen weiteren austauschbaren pod und/oder einen weiteren austauschbaren Behälter für Flüssigkeit und/oder ein Fach für einen Akku liefert und/oder der austauschbare pod (54, 55) mit dem Behälter (57) für Flüssigkeit und/oder einem Fach (58) für einen Akku mittels der Drohne (5) lieferbar oder einsammelbar ist.

7. System nach einem der vorhergehenden Ansprüche 1 bis 6, **dadurch gekennzeichnet, dass** Informationen der Drohne (5), der autonomen Reinigungsvorrichtung (6, 6.1, 6.2, 6.3), der Basis (7), des Inspektionsmoduls (4) und der Vergleichsvorrichtung (3) in einem Rechner gesammelt und ausgewertet werden können.

8. System nach einem der vorhergehenden Ansprüche 1 bis 7, **dadurch gekennzeichnet, dass** die autonome Reinigungsvorrichtung (6, 6.1, 6.2, 6.3) Folgendes umfasst:
- ein RF (Radiofrequenz)-Generator-Modul (11),
- ein Megaschallwandler- und Prozessflüssigkeitsverteiler-Modul (16),
- ein Prozessflüssigkeitsversorgungs-Modul (19),
- ein Bewegungs- und Positionierungs-Modul (24) und
- ein Steuerkommunikations-Modul (29).

9. System nach einem der vorhergehenden Ansprüche 1 bis 8, **dadurch gekennzeichnet, dass** die Drohne (5) mittels eines Prozessparameters die Position und den Standort der Photovoltaik-Module (2, 2a) in Bezug auf das Inspektionsmodul (4) erfasst und übermittelt.

10. System nach einem der vorhergehenden Ansprüche 1 bis 9, **dadurch gekennzeichnet, dass** eine der Vergleichsvorrichtungen (3) unter identischen Prozessparametern wie die Photovoltaik-Module (2, 2a) angeordnet ist, wobei die Vergleichsvorrichtung (3) Informationen über die Verschmutzung der Photovoltaik-Module (2, 2a) und ihrer Deckgläser (1) unter den jeweiligen Bedingungen der Prozessparameter erfasst und weiterleitet.

11. System nach Anspruch 10, **dadurch gekennzeichnet, dass** eine Referenz-Photovoltaikzelle (48) mit einer Abdeckung (49) vorgesehen ist, wobei an der Referenz-Photovoltaikzelle (48) ein Referenzzustand eines Photovoltaik-Moduls ablesbar ist.

12. System nach Anspruch 10 oder 11, **dadurch gekennzeichnet, dass** die Abdeckung (49) lösbar mit der Vergleichseinrichtung (3) verbunden ist.

13. Verfahren zum Reinigen eines Deckglases (1) eines Photovoltaik-Moduls (2, 2a) mittels einer autonomen Reinigungsvorrichtung (6, 6.1, 6.2, 6.3), welche die folgenden Schritte umfasst:
- ein Inspektionsmodul (4) erfasst und übermittelt die Position und den Standort der Photovoltaik-Module (2, 2a);
- eine Vergleichseinrichtung (3) erfasst und übermittelt Informationen über die Verschmutzung der Photovoltaik-Module (2, 2a) und ihrer Deckgläser (1);
- wenn ein vorbestimmter Verschmutzungsgrad der Deckgläser (1) der Photovoltaik-Module (2, 2a) erreicht ist, wird eine Reinigungssequenz eingeleitet,
- eine erste autonome Reinigungsvorrichtung (6.1, 6.3) wird zu einem ersten Deckglas (1) eines ersten Photovoltaik-Moduls (2) transportiert;
- die erste autonome Reinigungsvorrichtung (6.1, 6.3) reinigt das erste Deckglas (1) des ersten Photovoltaik-Moduls (2); wobei ein Megaschallwandler (17, 67) relativ zu einem ersten Deckglas (1) eines ersten Photovoltaik-Moduls (2) positioniert ist,
- ein Spalt (44) mit einer vorbestimmten Breite (b) wird zwischen dem Deckglas (1) des Photovoltaik-Moduls (2) und einer aktiven Fläche (45) des Megaschallwandlers (17, 67) gebildet,
- der Spalt (44) wird zumindest teilweise mit einer Prozessflüssigkeit gefüllt,
- durch den Megaschallwandler (17, 67) werden Megaschallschwingungen in die Prozessflüssigkeit in dem Spalt (44) und auf zumindest einen Teil des Deckglases (1) des Photovoltaik-Moduls (2) übertragen,
- in einem Bereich einer Fläche (47) des Deckglases (1) des Photovoltaik-Moduls (2) werden Kavitationsblasen erzeugt, wobei beim Kollabieren der Kavitationsblasen lokale Schockwellen emittiert werden, um die an der Fläche (47) des Deckglases (1) anhaftenden Partikel/Verunreinigungen abzulösen,
- durch die Strömung der Prozessflüssigkeit durch den Spalt (44) werden die Partikel/Verunreinigungen von der Fläche (47) des Deckglases (1) des Photovoltaik-Moduls (2) abtransportiert,
- die erste autonome Reinigungsvorrichtung (6.1, 6.3) wird zu einem weiteren Deckglas eines weiteren Photovoltaik-Moduls (2) oder zu einer Basis (7) transportiert;
- Wiederholen der Schritte 4 bis 6 mit demselben oder weiteren autonomen Reinigungsvorrichtungen (6, 6.1, 6.2, 6.3), bis alle Deckgläser (1) aller Photovoltaik-Module (2, 2a) gereinigt sind.

## Revendications

1. Système de nettoyage de lunettes (1) de modules photovoltaïques (2, 2a) comprenant un dispositif de nettoyage autonome (6, 6.1, 6.2, 6.3) comprenant un transducteur mégasonique (17, 67), le système comprenant en outre un drone (5), un dispositif de comparaison (3) et un module d'inspection (4) pour mapper le champ de module photovoltaïque et les modules photovoltaïques (2, 2a), fournissant des points de référence pour les points de collecte et de retour du dispositif de nettoyage autonome (6, 6.1, 6.2, 6.3), **caractérisé en ce que** le dispositif de comparaison compare l'efficacité d'un champ de module photovoltaïque avec l'efficacité d'une cellule photovoltaïque de référence propre (48), un écoulement de fluide de traitement à travers un espace activé acoustiquement (44) entre le verre de protection (1) du module photovoltaïque (2, 2a) et une surface active (45) du transducteur mégasonique (17, 67) est prévu pour les particules/impuretés à transporter à distance du verre de protection (1) du module photovoltaïque (2, 2a) et le dispositif de nettoyage autonome (6, 6.1, 6.2, 6.3) et le module d'inspection (4) sont transportables séparément aux modules photovoltaïques (2, 2a) au moyen du drone (5).

2. Système selon la revendication 1, **caractérisé en ce que** le drone (5) peut transporter le module d'inspection (4) ou le dispositif de nettoyage autonome (6, 6.1, 6.2, 6.3) à partir d'une base (7) au module photovoltaïque (2) ou à partir du module photovoltaïque (2) et d'un autre module photovoltaïque (2a) et le ramener à la base (7).

3. Système selon l'une des revendications précédentes 1 ou 2,
**caractérisé en ce que** le dispositif de nettoyage autonome (6, 6.1, 6.2) comprend une batterie échangeable (37) et un récipient de liquide échangeable (20).

4. Système selon l'une des revendications précédentes 1 à 2,
**caractérisé en ce que** le dispositif de nettoyage autonome (6.3) comprend une capsule échangeable (54, 55) avec un récipient (57) pour liquide et/ou un compartiment (58) pour une batterie de stockage.

5. Système selon la revendication 3 ou 4, **caractérisé en ce que** le drone (5) alimente le dispositif de nettoyage autonome (6, 6.1, 6.2), une autre batterie échangeable et/ou un autre récipient de liquide échangeable et la batterie échangeable (37) et/ou le récipient de liquide échangeable (20) peut être distribué ou collecté au moyen du drone (5).

6. Système selon la revendication 4 ou 5, **caractérisé en ce que** le drone (5) alimente le dispositif de nettoyage autonome (6.3), une autre capsule échangeable et/ou un autre récipient échangeable pour liquide et/ou un compartiment pour une batterie de stockage et/ou la capsule échangeable (54, 55) avec le récipient (57) pour liquide et/ou un compartiment (58) pour une batterie de stockage peut être délivré ou collecté au moyen du drone (5).

7. Système selon l'une des revendications précédentes 1 à 6,
**caractérisé en ce que** des informations provenant du drone (5), du dispositif de nettoyage autonome (6, 6.1, 6.2, 6.3), de la base (7), du module d'inspection (4) et du dispositif de comparaison (3) peuvent être collectées et évaluées dans un ordinateur.

8. Système selon l'une des revendications précédentes 1 à 7,
**caractérisé en ce que** le dispositif de nettoyage autonome (6, 6.1, 6.2, 6.3) comprend les éléments suivants :
- un module générateur RF (radiofréquence) (11),
- un transducteur mégasonique et un module de distribution de liquide de traitement (16),
- un module d'alimentation en liquide de traitement (19),
- un module de mouvement et de positionnement (24) et
- un module de communication de commande (29).

9. Système selon l'une des revendications précédentes 1 à 8,
**caractérisé en ce que** le drone (5) détecte et transmet au moyen d'une position et d'une localisation de paramètres de traitement des modules photovoltaïques (2, 2a) respectifs au module d'inspection (4).

10. Système selon l'une des revendications précédentes 1 à 9,
**caractérisé en ce que** l'un des dispositifs de comparaison (3) est agencé dans des paramètres de traitement identiques en tant que modules photovoltaïques (2, 2a), le dispositif de comparaison (3) détectant et transmettant des informations concernant la contamination des modules photovoltaïques (2, 2a) et leurs lunettes de couverture (1) dans les conditions respectives des paramètres de traitement.

11. Système selon la revendication 10, **caractérisé en ce qu'**une cellule photovoltaïque de référence (48) avec un couvercle (49) est fournie, un état de référence d'un module photovoltaïque étant lisible depuis la cellule photovoltaïque de référence (48).

12. Système selon la revendication 10 ou 11, **caractérisé en ce que** le couvercle (49) est lié de manière détachable au dispositif de comparaison (3).

13. Procédé de nettoyage d'un verre de protection (1) d'un module photovoltaïque (2, 2a) au moyen d'un dispositif de nettoyage autonome (6, 6.1, 6.2, 6.3) comprenant les étapes suivantes :
- un module d'inspection (4) détecte et transmet la position et l'emplacement des modules photovoltaïques (2, 2a) ;
- un dispositif de comparaison (3) détecte et transmet des informations concernant la contamination des modules photovoltaïques (2, 2a) et leurs lunettes de couverture (1) ;
- si un degré de contamination prédéterminé des lunettes (1) de couverture des modules photovoltaïques (2, 2a) est atteint, une séquence de nettoyage est initiée,
- un premier dispositif de nettoyage autonome (6.1, 6.3) est transporté vers un premier verre de protection (1) d'un premier module photovoltaïque (2) ;
- le premier dispositif de nettoyage autonome (6.1, 6.3) nettoie le premier verre de protection (1) du premier module photovoltaïque (2) ; dans lequel un transducteur mégasonique (17, 67) est positionné par rapport à un premier verre de protection (1) d'un premier module photovoltaïque (2),
- un espace (44) ayant une largeur prédéterminée (b) est formé entre le verre de protection (1) du module photovoltaïque (2) et une surface active (45) du transducteur mégasonique (17, 67),
- l'espace (44) est au moins partiellement rempli d'un fluide de traitement,
- les oscillations mégasoniques sont transmises par le transducteur mégasonique (17, 67) dans le fluide de traitement dans l'espace (44) et à au moins une partie du verre de protection (1) du module photovoltaïque (2),
- des bulles de cavitation sont générées dans une région d'une surface (47) du verre de protection (1) du module photovoltaïque (2), dans lequel, lors de l'effondrement des bulles de cavitation, des ondes de choc locales sont émises pour déloger les particules/impuretés adhérant à la surface (47) du verre de protection (1),
- par l'écoulement du fluide de traitement à travers l'espace (44), les particules/impuretés sont transportées à distance de la surface (47) du verre de protection (1) du module photovoltaïque (2),
- le premier dispositif de nettoyage autonome (6.1, 6.3) est transporté vers un verre de protection supplémentaire d'un autre module photovoltaïque (2) ou à une base (7) ;
- la répétition des étapes 4 à 6 avec les mêmes ou autres dispositifs de nettoyage autonomes (6, 6.1, 6.2, 6.3) jusqu'à ce que tous les verres de couverture (1) de tous les modules photovoltaïques (2, 2a) soient nettoyés.
